(19) Europäisches Patentamt European Patent Office Office européen des brevets

(11) **EP 4 514 014 A1**

(12) **EUROPEAN PATENT APPLICATION**
published in accordance with Art. 153(4) EPC

(43) Date of publication:
26.02.2025 Bulletin 2025/09

(51) International Patent Classification (IPC):
*H04W 72/0446* (2023.01)

(21) Application number: 23870911.7

(22) Date of filing: 27.09.2023

(86) International application number:
PCT/CN2023/121963

(87) International publication number:
WO 2024/067684 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.09.2022 CN 202211215202

(71) Applicant: ZTE Corporation
Shenzhen, Guangdong 518057 (CN)

(72) Inventors:
• XING, Weimin
Shenzhen, Guangdong 518057 (CN)
• HU, Yuzhou
Shenzhen, Guangdong 518057 (CN)
• LU, Youxiong
Shenzhen, Guangdong 518057 (CN)

(74) Representative: Aipex B.V.
Vestdijk 51
5611 CA Eindhoven (NL)

(54) **COMMUNICATION METHODS AND DEVICE, AND STORAGE MEDIUM**

(57) Provided are a communication method and device and a storage medium. The communication method applied by a communication node includes receiving (S210) a sidelink semi-static access parameter and a sidelink time domain resource configuration parameter configured by a network; determining (S220) a sidelink resource pool slot set based on the sidelink semi-static access parameter and the sidelink time domain resource configuration parameter; and performing (S230) sidelink communication based on at least one slot in the sidelink resource pool slot set.

| Receive a sidelink semi-static access parameter and a sidelink time domain resource configuration parameter configured by a network | S210 |
|---|---|
| Determine a sidelink resource pool slot set based on the sidelink semi-static access parameter and the sidelink time domain resource configuration parameter | S220 |
| Perform sidelink communication based on at least one slot in the sidelink resource pool slot set | S230 |

**FIG. 2**

**Description**

TECHNICAL FIELD

The present application relates to the field of communications, for example, a communication method and device and a storage medium.

BACKGROUND

Semi-static channel occupancy is also referred to as periodic channel occupancy. A communication device (for example, a base station or a terminal) can enable channel occupancy in a semi-static channel access period. This channel occupancy can be referred to as channel occupancy time (COT). Moreover, sidelink (SL) communication differs significantly from uplink and downlink communication in terms of resource allocation.

SUMMARY

In view of this, embodiments of the present application provide a communication method and device and a storage medium, enabling semi-static channel access and occupancy based on the structure of a sidelink resource pool in sidelink communication.

An embodiment of the present application provides a communication method. The method is applied by a communication node. The method includes receiving a sidelink semi-static access parameter and a sidelink time domain resource configuration parameter configured by a network; determining a sidelink resource pool slot set based on the sidelink semi-static access parameter and the sidelink time domain resource configuration parameter; and performing sidelink communication based on at least one slot in the sidelink resource pool slot set.

An embodiment of the present application provides a communication method. The method is applied by a network. The method includes configuring a sidelink semi-static access parameter and a sidelink time domain resource configuration parameter; and sending the sidelink semi-static access parameter and the sidelink time domain resource configuration parameter to a communication node to enable the communication node to determine a sidelink resource pool slot set based on the sidelink semi-static access parameter and the sidelink time domain resource configuration parameter and perform sidelink communication based on at least one slot in the sidelink resource pool slot set.

An embodiment of the present application provides a communication device. The communication device includes a memory and at least one processor.

The memory is configured to store at least one program. When executed by the at least one processor, the at least one program causes the at least one processor to perform the communication method of any previous embodiment.

An embodiment of the present application provides a storage medium storing a computer program which, when executed by a processor, causes the processor to perform the communication method of any previous embodiment.

BRIEF DESCRIPTION OF DRAWINGS

FIG. 1 is a configuration diagram of a frame-based equipment (FBE) time domain structure according to an embodiment of the present application.

FIG. 2 is a flowchart of a communication method according to an embodiment of the present application.

FIG. 3 is a flowchart of a communication method according to an embodiment of the present application.

FIG. 4 is a configuration diagram of a semi-static channel access period according to an embodiment of the present application.

FIG. 5 is a configuration diagram of a semi-static channel access period according to an embodiment of the present application.

FIG. 6 is a configuration diagram of a semi-static channel access period according to an embodiment of the present application.

FIG. 7 is a block diagram of a communication apparatus according to an embodiment of the present application.

FIG. 8 is a block diagram of a communication apparatus according to an embodiment of the present application.

FIG. 9 is a diagram illustrating the structure of a communication device according to an embodiment of the present application.

DETAILED DESCRIPTION

Embodiments of the present application are described hereinafter in conjunction with drawings. The present application is described hereinafter in conjunction with embodiments and drawings. The examples illustrated are intended to explain the present application.

In a sidelink communication process, a UE acquires resources in a sidelink resource pool by using the following two modes.

Resource allocation mode 1: The sidelink resources for sidelink transmission are scheduled for the UE by a base station. Resource allocation mode 2: The UE determines the sidelink resources for sidelink transmission, that is, the base station does not schedule the sidelink resources for sidelink transmission from the sidelink resource pool.

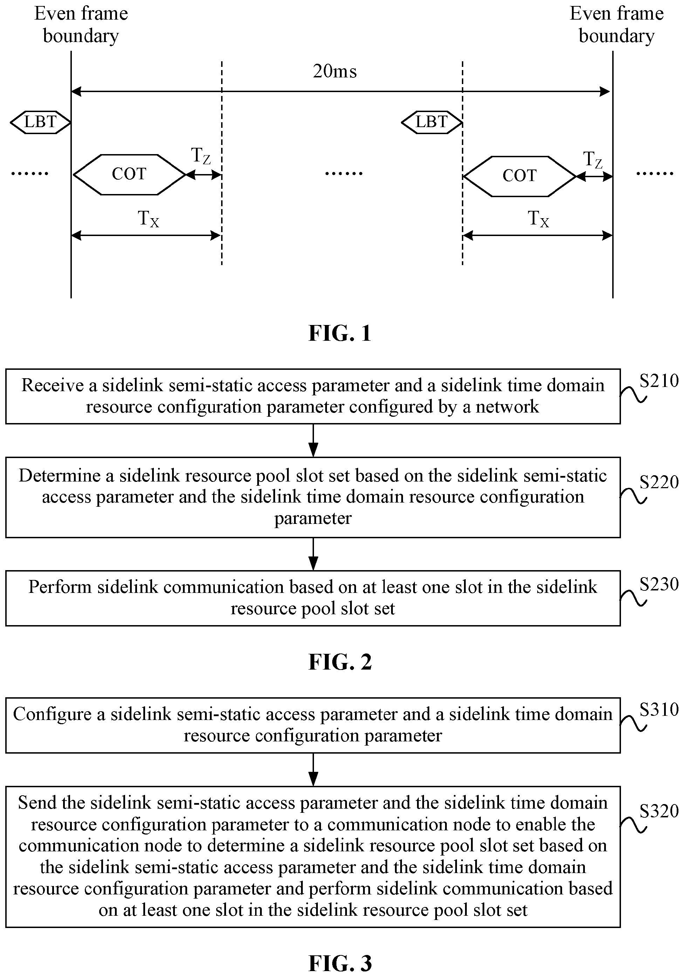

The semi-static channel access/occupancy technology is also referred to as frame-based equipment (FBE). Generally, a channel occupied in the FBE period is used for data transmission. FIG. 1 is a configuration diagram of a frame-based equipment (FBE) time domain structure according to an embodiment of the present application. The following describes the relationship between the channel occupancy time (COT), the idle phase, and the listen-before-talk (LBT) by using an example in which the FBE period is two consecutive radio frames (that is, 20 ms) as shown in FIG. 1.

The two consecutive radio frames (that is, 20 ms) can contain an integer number of transmission periods ($T_x$), called FBE period. The communication device performs at least one sensing slot detection before the start time of a transmission period ($T_x$), that is, performs LBT before the period begins. If the channel is available or idle, the communication device initiates transmission and enables COT at the start time of $T_x$. If the channel is busy, the communication device is unable to access the channel for the entire duration of the current $T_x$. If communication device A enables COT successfully at the start time of $T_x$, the COT occupies at most 95% of $T_x$. An idle phase of $T_z$ is required to be reserved at the end of the $T_x$ period. The value of $T_z$ is an implementation issue but is required to be greater than or equal to the minimum value. That is, $T_z$ is required to be at least max ($0.05T_x$, 100 μs). In the idle phase $T_z$ of the $T_x$ period, all communication devices cannot send any signal.

Resource allocation in SL communication is based on a resource pool. The resource pool contains a set of slots for SL communication. These slots are logically consecutive but may be physically nonconsecutive. The following describes how to acquire the slots contained in the resource pool.

S1: A frame number period (10240 ms) contains 10240 * $2^\mu$ physical slots. From the physical slots contained in the frame number period, a sidelink candidate slot set is selected and denoted as

$$\left(t_0^{SL}, t_1^{SL}, \cdots, t_{T_{\max}-1}^{SL}\right)$$

. T_max denotes the number of slots contained in the sidelink candidate slot set in the frame number period. μ depends on the subcarrier spacing (SCS) used for the current communication. μ = 0, 1, 2, 3, ... denotes that SCS = 15 KHz, 30 KHz, 60 KHz, 120 KHz, ....

S2: In a frame number period, a slot set (that is, a sidelink resource pool slot set)

$$\left(t_0^{'SL}, t_1^{'SL}, t_2^{'SL}, \ldots\ldots, t_{T_{\max}'-1}^{'SL}\right)$$

contained in the resource pool is selected from the sidelink candidate slot set $\left(t_0^{SL}, t_1^{SL}, \cdots, t_{T_{\max}-1}^{SL}\right)$. $T_{\max}'$ denotes the number of slots contained in the SL resource pool in the frame number period.

Configuration generally refers to the method by which configuration signaling is notified to the UE by a network entity (hereinafter collectively referred to as the network) such as a base station, an access point, a central node, or a higher-layer entity. Preconfiguration typically refers to prestored configuration information or default configuration information in the UE from the factory. Additionally, preconfiguration can be updated by the network or in other manners. Predefinition refers to configurations or parameters that are explicitly defined in a protocol and that cannot be updated. In the present application, no distinction is made between configuration, preconfiguration, and predefinition, collectively referred to as configuration. In an example, the network may configure the use of the unlicensed spectrum for SL communication in a semi-static manner. Subsequently in this example or in subsequent examples, it may also be assumed that the mode of use of the unlicensed spectrum is configured as semi-static.

FIG. 2 is a flowchart of a communication method according to an embodiment of the present application. This embodiment is applied to a scenario of semi-static channel access in an unlicensed frequency band. This embodiment may be implemented by a communication node. By way of example, the communication node may be a terminal (for example, a UE). As shown in FIG. 2, this embodiment includes S210 to S230.

In S210, a sidelink semi-static access parameter and a sidelink time domain resource configuration parameter configured by a network are received.

In S220, a sidelink resource pool slot set is determined based on the sidelink semi-static access parameter and the sidelink time domain resource configuration parameter.

In S230, sidelink communication is performed based on at least one slot in the sidelink resource pool slot set.

In an embodiment, the network sends the sidelink semi-static access parameter and the sidelink time domain resource configuration parameter to the communication node to enable the communication node to determine the sidelink resource pool slot set based on the sidelink semi-static access parameter and the sidelink time domain resource configuration parameter and perform sidelink communication based on at least one slot in the sidelink resource pool slot set, enabling semi-static channel access and occupancy based on the structure of a sidelink resource pool.

In an embodiment, the sidelink semi-static access parameter includes at least one of the following: the start offset value of a semi-static channel access period, the trigger phase of a semi-static channel access period, or the idle phase of a semi-static channel access period.

In an embodiment, the start offset value of the semi-static channel access period refers to the offset value relative to a reference point. In an embodiment, when the start offset value is a positive number, the start point of the semi-static access period is after the reference point. In an embodiment, when the start offset value is a negative number, the start point of the semi-static access period is before the reference point. In an embodiment, when the reference point is the boundary of an even frame, the start offset value is the offset value between the first semi-static channel access period in this even frame and the reference point. In an embodiment, the trigger phase of the semi-static channel access period refers to the duration for sending the trigger signal in the semi-static channel access period. For each semi-static channel access period, the trigger phase of the semi-static channel access period is located at the start position of the semi-static channel access period. In an embodiment, the idle phase of the semi-static channel access period refers to multiple reserved symbols or slots in the semi-static channel access period. For each semi-static channel access period, the idle phase of the semi-static channel access period is located at the end position of the semi-static channel access period.

In an embodiment, the sidelink time domain resource configuration parameter includes at least one of the following: a sidelink resource pool slot bitmap, a synchronization signal block slot set, time division duplex configuration information, or sidelink slot symbol configuration information. In an embodiment, the sidelink resource pool slot bitmap indicates whether each slot in the sidelink resource pool is configured for sidelink communication. In an embodiment, the synchronization signal block slot set refers to a set of multiple slots for transmission of the synchronization signal block. In an embodiment, the time division duplex configuration information refers to the transmission direction corresponding to each non-sidelink slot or each symbol contained in the non-sidelink slot in the non-sidelink slot set. In an embodiment, the transmission direction corresponding to each non-sidelink slot or each symbol contained in the non-sidelink slot includes one of the following: uplink, downlink, or flexible. In an embodiment, the sidelink slot symbol configuration information refers to information about configuration of at least some of the symbols in a sidelink slot. In an embodiment, the sidelink slot symbol configuration information may include one of the following: the start symbol, the sidelink symbol length, or the number of sidelink symbols.

In an embodiment, determining the sidelink resource pool slot set based on the sidelink semi-static access parameter and the sidelink time domain resource configuration parameter includes determining a sidelink candidate slot set based on the sidelink semi-static access parameter and the sidelink time domain resource configuration parameter; and determining the sidelink resource pool slot set from the sidelink candidate slot set based on the sidelink resource pool slot bitmap. In an embodiment, the communication node selects a candidate slot set for sidelink communication based on the sidelink semi-static access parameter and the sidelink time domain resource configuration parameter; and then selects a slot set for sidelink communication from the sidelink candidate slot set based on the sidelink resource pool slot bitmap to serve as the sidelink resource pool slot set.

In an embodiment, the trigger phase includes a first preset duration after the start time of the semi-static channel access period; and the first preset duration is determined based on one of the following: the start offset value of the semi-static channel access period, the slot length of at least one slot, or a length configured using the sidelink semi-static access parameter. In an embodiment, the first preset duration refers to the time length (that is, duration) corresponding to the trigger phase of the semi-static channel access period. In an embodiment, the first preset duration may be multiple symbols or multiple slots. In an embodiment, the trigger phase refers to an interval that starts from the first symbol in the first slot of the semi-static channel access period and lasts for the first preset duration. In an embodiment, the first preset duration may be less than or equal to the start offset value of the semi-static channel access period. In an embodiment, the first preset duration may be less than or equal to the difference value between the length of at least one slot and the start offset value of the semi-static channel access period. In an embodiment, the value of the first preset duration (that is, the length of the trigger) is configured using the sidelink semi-static access parameter.

In an embodiment, the sidelink candidate slot set includes a set other than at least one of the following slot sets: a slot set containing a particular symbol overlapping an idle phase, a slot set for transmission of a synchronization signal block, a non-sidelink slot set, or a reserved slot set. In an embodiment, if a particular symbol in a slot overlaps an idle phase, this slot is merged into the slot set containing the particular symbol overlapping the idle phase. In an embodiment, if at least one symbol in a slot is not configured as uplink, this slot is merged into a non-sidelink slot set. In an embodiment, the reserved slot set refers to a set of reserved slots determined based on preconfigured operations.

In an embodiment, the number of particular symbols overlapping the idle phase satisfies one of the following conditions: at least one sidelink symbol among a first preset number of sidelink symbols in a slot; at least one sidelink symbol among first second preset number of sidelink symbols among a first preset number of sidelink symbols in a slot; or at least a third preset number of sidelink symbols among a first preset number of sidelink symbols in a slot. The second preset number is the first preset number minus one. The first preset number of sidelink symbols in the slot include the first preset number of symbols after a start symbol determined by the sidelink slot symbol configuration information. The first preset number is determined by a configured number of sidelink symbols. The difference value between the first preset number and the third preset number is less than a first threshold. In an embodiment, the first preset number of sidelink symbols refers to symbols for sidelink transmission in the slot. In an embodiment, the third preset number of sidelink symbols refers to symbols overlapping the idle phase in the slot. In an embodiment, the sidelink symbols corresponding to the difference value between the first preset number and the third preset number refer to available symbols not overlapping the idle phase in the slot. In an embodiment, if the number of available symbols not overlapping the idle phase in a slot is less than the first threshold, few available symbols remain in this slot, and this slot may be excluded.

In an embodiment, the difference value between the first preset number and the third preset number is greater than the first threshold and less than a second threshold, and the slot is configured to carry a particular sidelink signal. The particular sidelink signal includes one of the following: a feedback signal, a sidelink trigger signal, or a reference signal. In an embodiment, if the number of available symbols not overlapping the idle phase in a slot is greater than or equal to the first threshold and less than the second threshold, this slot may be configured for carrying a particular sidelink signal. In an embodiment, the particular sidelink signal refers to a signal that occupies a relatively small number of symbols during transmission. In an embodiment, the particular sidelink signal includes one of the following: a feedback signal, a sidelink trigger signal, or a reference signal.

In an embodiment, the sidelink semi-static access parameter includes a first bitmap of a first preset length. The first bitmap is configured to indicate a semi-static channel access period configured for sidelink communication in a second preset duration. In an embodiment, the second preset duration may be a frame coding period (for example, 10240 ms). In an embodiment, the second preset duration may be a dual-frame period (for example, 20 ms between two even frame boundaries). In an embodiment, the first bitmap of the first preset length indicates which semi-static channel access periods in the second preset duration can be used for sidelink communication.

In an embodiment, the sidelink candidate slot set includes a set other than a slot set consisting of slots contained in a semi-static channel access period indicated by the first bitmap as not configured for sidelink communication. In an embodiment, if the semi-static channel access period of a slot cannot be used for sidelink communication, this slot is excluded from the sidelink candidate slot set, and all slots in the semi-static channel access period not indicated by the first bitmap as configured for sidelink communication are excluded.

In an embodiment, determining the reserved slot set includes determining the number of slots contained in the reserved slot set based on the number of slots contained in a first slot set and the length of the sidelink resource pool slot bitmap, where the number of slots contained in the first slot set is the difference value between the total number of slots in a third preset duration and the number of slots contained in a second slot set; the first slot set is the difference set between the slots in the third preset duration and the slots contained in the second slot set; and a slot in the second slot set satisfies at least one of the following: a slot containing a particular symbol overlapping the idle phase, a slot for transmission of a synchronization signal block, a non-sidelink slot, or a slot contained in a semi-static channel access period not configured for sidelink communication; and determining the reserved slot set by determining the slot index of a reserved slot in the first slot set, where the slot index of the reserved slot satisfies the floor value of the ratio of the product of a first preset value and the number of slots contained in the first slot set to the number of slots contained in the reserved slot set, where the first preset value is a non-negative integer less than the number of slots contained in the reserved slot set.

In an embodiment, the communication method applied by the communication node also includes receiving a trigger signal configuration parameter configured by the network; and sending a trigger signal and enabling channel occupancy based on the trigger signal configuration parameter in a first semi-static access period. The first semi-static access period is an access period of a first slot. The first slot is a slot allocated for the communication node to perform sidelink communication. The first slot is a slot in the sidelink resource pool slot set. In an embodiment, the communication node receives the trigger signal configuration parameter; and sends a trigger signal and enables channel occupancy based on the trigger signal configuration parameter in the trigger phase of the first semi-static access period.

In an embodiment, the communication method applied by the communication node also includes performing listen-before-talk (LBT) in a third preset duration before the start time of the first semi-static access period. In an embodiment, the communication node performs LBT in a period of time before the start time of the first semi-static access period to determine whether a semi-static channel is idle. If determining that the semi-static channel is idle, the communication node sends a trigger signal and enables channel occupancy at the start time of the first semi-static access period.

In an embodiment, the trigger signal configuration parameter includes at least one of the following: the number of symbols occupied by the trigger signal, the frequency domain position of the trigger signal, or the format of the trigger signal. In an embodiment, the number of symbols occupied by the trigger signal is less than or equal to the length of the trigger phase. In an embodiment, the trigger signal may occupy one or more consecutive or discrete frequency domain resource blocks (RBs). In an embodiment, the discrete frequency-domain RBs may be one or more interlace RBs. In an embodiment, the trigger signal may use other sidelink signal formats. By way of example, the format of the trigger signal may include, but is not limited to: a feedback channel, a shared channel, a control channel, a synchronization channel, or an SL reference signal.

In an embodiment, the communication method applied by the communication node also includes receiving a shared channel occupancy condition configured by the network; and sharing channel occupancy of another communication node according to the shared channel occupancy condition in a second semi-static access period. The second semi-static access period is an access period of a second slot. The second slot is a slot allocated for the communication node to perform sidelink communication. The second slot is a slot in the sidelink resource pool slot set.

In an embodiment, the shared channel occupancy condition includes at least one of the following: a trigger signal of another communication node is detected at the start time of the second semi-static access period; sidelink transmission by another communication node is detected in the second semi-static access period; channel occupancy sharing information sent by another communication node is detected, where the channel occupancy sharing information includes at least one of the following: remaining channel occupancy duration, a channel access priority level, or a channel sharing target identifier; the channel access priority level of the communication node is higher than or equal to the channel access priority level indicated by another communication node whose channel occupancy is enabled; the communication node is a communication node determined by or a communication node in a communication node set determined by a channel sharing target identifier indicated by another communication node whose channel occupancy is enabled; a destination device for sidelink transmission by the communication node includes at least another communication node whose channel occupancy is enabled; or a resource for sidelink transmission by the communication node does not overlap a resource reserved by another communication node whose channel occupancy is enabled.

In an embodiment, the communication method applied by the communication node also includes performing a channel access process before the first slot or the second slot.

In an embodiment, the channel access process includes one of the following: in response to the interval between sidelink transmission in the first slot and previous sidelink transmission in the first semi-static access period being greater than a fourth preset duration, the communication node performs LBT sensing in a fifth preset duration before the transmission in the first slot; in response to the interval between sidelink transmission in the first slot and sidelink transmission by another communication node in the first semi-static access period being greater than a fourth preset duration, the communication node performs LBT sensing in a fifth preset duration before the transmission in the first slot; in response to the interval between sidelink transmission in the first slot and previous sidelink transmission being less than or equal to a fourth preset duration, the communication node performs sidelink transmission in the first slot; in response to the interval between sidelink transmission in the first slot and sidelink transmission by another communication node being less than or equal to a fourth preset duration, the communication node performs sidelink transmission in the first slot; or sidelink transmission by the communication node is performed in a slot other than an idle phase in the first semi-static access period.

FIG. 3 is a flowchart of a communication method according to an embodiment of the present application. This embodiment is applied to a scenario of semi-static channel access in an unlicensed frequency band. This embodiment may be implemented by a network. As shown in FIG. 3, this embodiment includes S310 and S320.

In S310, a sidelink semi-static access parameter and a sidelink time domain resource configuration parameter are configured.

In S320, the sidelink semi-static access parameter and the sidelink time domain resource configuration parameter are sent to a communication node to enable the communication node to determine a sidelink resource pool slot set based on the sidelink semi-static access parameter and the sidelink time domain resource configuration parameter and perform sidelink communication based on at least one slot in the sidelink resource pool slot set.

In an embodiment, the communication method applied by the network also includes sending a preconfigured trigger signal configuration parameter to the communication node to enable the communication node to send a trigger signal and enable channel occupancy based on the trigger signal configuration parameter in a first semi-static access period. The first semi-static access period is an access period of a first slot. The first slot is a slot allocated for the communication node to perform sidelink communication. The first slot is a slot in the sidelink resource pool slot set.

In an embodiment, the communication method applied by the network also includes sending a preconfigured shared channel occupancy condition to the communication node to enable the communication node to share channel occupancy of another communication node according to the shared channel occupancy condition in a second semi-static access period. The second semi-static access period is an access period of a second slot. The second slot is a slot allocated for the communication node to perform sidelink communication. The second slot is a slot in the sidelink resource pool slot set.

In an embodiment, the sidelink semi-static access parameter includes at least one of the following: the start offset value of a semi-static channel access period, the trigger phase of a semi-static channel access period, or the idle phase of a semi-static channel access period.

In an embodiment, the sidelink time domain resource configuration parameter includes at least one of the following: a sidelink resource pool slot bitmap, a synchronization signal block slot set, time division duplex configuration information, or sidelink slot symbol configuration information.

In an embodiment, the communication node determines a sidelink resource pool slot set based on the sidelink semi-static access parameter and the sidelink time domain resource configuration parameter in the following manner: The communication node determines a sidelink candidate slot set based on the sidelink semi-static access parameter and the sidelink time domain resource configuration parameter. The communication node determines the sidelink resource pool slot set from the sidelink candidate slot set based on the sidelink resource pool slot bitmap.

In an embodiment, the trigger phase includes a first preset duration after the start time of the semi-static channel access period; and the first preset duration is determined based on one of the following: the start offset value of the semi-static channel access period, the slot length of at least one slot, or a length configured using the sidelink semi-static access parameter.

In an embodiment, the sidelink candidate slot set includes a set other than at least one of the following slot sets: a slot set containing a particular symbol overlapping an idle phase, a slot set for transmission of a synchronization signal block, a non-sidelink slot set, or a reserved slot set.

In an embodiment, the number of particular symbols overlapping the idle phase satisfies one of the following conditions: at least one sidelink symbol among a first preset number of sidelink symbols in a slot; at least one sidelink symbol among first second preset number of sidelink symbols among a first preset number of sidelink symbols in a slot; or at least a third preset number of sidelink symbols among a first preset number of sidelink symbols in a slot. The second preset number is the first preset number minus one. The first preset number of sidelink symbols in the slot include the first preset number of symbols after a start symbol determined by the sidelink slot symbol configuration information. The first preset number is determined by a configured number of sidelink symbols. The difference value between the first preset number and the third preset number is less than a first threshold.

In an embodiment, the difference value between the first preset number and the third preset number is greater than the first threshold and less than a second threshold, and the slot is configured to carry a particular sidelink signal. The particular sidelink signal includes one of the following: a feedback signal, a sidelink trigger signal, or a reference signal.

In an embodiment, the sidelink semi-static access parameter includes a first bitmap of a first preset length. The first bitmap is configured to indicate a semi-static channel access period configured for sidelink communication in a second preset duration.

In an embodiment, the sidelink candidate slot set includes a set other than a slot set consisting of slots contained in a semi-static channel access period indicated by the first bitmap as not configured for sidelink communication.

In an embodiment, determining the reserved slot set includes determining the number of slots contained in the reserved slot set based on the number of slots contained in a first slot set and the length of the sidelink resource pool slot bitmap, where the number of slots contained in the first slot set is the difference value between the total number of slots in a third preset duration and the number of slots contained in a second slot set; the first slot set is the difference set between the slots in the third preset duration and the slots contained in the second slot set; and a slot in the second slot set satisfies at least one of the following: a slot containing a particular symbol overlapping the idle phase, a slot for transmission of a synchronization signal block, a non-sidelink slot, or a slot contained in a semi-static channel access period not configured for sidelink communication; and determining the reserved slot set by determining the slot index of a reserved slot in the first slot set, where the slot index of the reserved slot satisfies the floor value of the ratio of the product of a first preset value and the number of slots contained in the first slot set to the number of slots contained in the reserved slot set, where the first preset value is a non-negative integer less than the number of slots contained in the reserved slot set.

In an embodiment, the trigger signal configuration parameter includes at least one of the following: the number of symbols occupied by the trigger signal, the frequency domain position of the trigger signal, or the format of the trigger signal.

In an embodiment, the shared channel occupancy condition includes at least one of the following: a trigger signal of another communication node is detected at the start time of the second semi-static access period; sidelink transmission by another communication node is detected in the second semi-static access period; channel occupancy sharing information sent by another communication node is detected, where the channel occupancy sharing information includes at least one of the following: remaining channel occupancy duration, a channel access priority level, or a channel sharing target identifier; the channel access priority level of the communication node is higher than or equal to the channel access priority level indicated by another communication node whose channel occupancy is enabled; the communication node is a communication node determined by or a communication node in a communication node set determined by a channel sharing target identifier indicated by another communication node whose channel occupancy is enabled; a destination device for sidelink transmission by the communication node includes at least another communication node whose channel occupancy is enabled; or a resource for sidelink transmission by the communication node does not overlap a resource reserved by another communication node whose channel occupancy is enabled.

The explanations of the sidelink semi-static access parameter, sidelink time domain resource configuration parameter, sidelink resource pool slot set, trigger signal configuration parameter, shared channel occupancy condition, and other parameters used in the communication method applied by the network are detailed in the descriptions of the corresponding embodiments of the preceding communication method applied by the communication node and thus are not repeated here.

In an embodiment, the process of configuring the sidelink semi-static access parameter by the network is explained. In an embodiment, the network configures the usage mode of the unlicensed spectrum. When the usage mode is configured as semi-static, the sidelink semi-static access parameter includes at least one of the following: a semi-static channel access period (denoted as $T_u^{SL}$ ), the start offset value of a semi-static channel access period (denoted as $T_o^{SL}$ ), the idle phase of a semi-static channel access period (denoted as $T_w^{SL}$ ), or the trigger phase of a semi-static channel access period (denoted as $T_I^{SL}$ ).

For example, the start offset value relative to the reference point (denoted as $T_o^{SL}$ ) indicates that when the start offset value is positive, the start point of the semi-static channel access period $T_u^{SL}$ is located after the reference point and when the start offset value is negative, the start point of the semi-static channel access period $T_u^{SL}$ is located before the reference point. In an embodiment, when the reference point is the boundary of an even frame, $T_o^{SL}$ is the offset value between the first SL semi-static channel access period in this even frame and the reference point.

In an example, $T_w^{SL}$ is a predefined value, that is, $T_w^{SL} = \max(0.05 T_u^{SL}, 100us)$ , or is configured as X symbols or slots. Here X is a positive rational number. The idle phase is located at the end of each SL semi-static channel access period.

In an example, the trigger phase $T_I^{SL}$ is located at the beginning of each SL semi-static channel access period.

In an example, the trigger phase $T_I^{SL}$ is less than or equal to the negative $T_o^{SL}$ or less than or equal to $T_{slot}^{SL} - T_o^{SL}$ . $T_{slot}^{SL}$ denotes the time domain length of one or more slots. For example, $T_o^{SL}$ and $T_I^{SL}$ may be configured separately; or if a fixed relationship exists between them, configuring one of them implies also configuring the other of them.

In an example, $T_w^{SL} + T_o^{SL}$ or $T_w^{SL} + T_I^{SL}$ is equal to Z symbols. Z is a positive integer. For example, $T_o^{SL}$ and $T_w^{SL}$ may be configured separately; or if a fixed relationship exists between them, configuring one of them implies also configuring the other of them. The same goes to $T_I^{SL}$ and $T_w^{SL}$ .

In an embodiment, this embodiment illustrates how to avoid an overlap between an SL resource and the idle phase in the FBE mode, that is, avoid an overlap between the sidelink candidate slot set $\left( t_0^{SL}, t_1^{SL}, \cdots, t_{T_{max}-1}^{SL} \right)$ and the idle phase. In an example, the process by which the communication node determines slots contained in the sidelink candidate slot set $\left( t_0^{SL}, t_1^{SL}, \cdots, t_{T_{max}-1}^{SL} \right)$ includes the following manners.

If the network configures the mode of use of the unlicensed spectrum as semi-static and if a particular symbol in a slot overlaps the idle phase, this slot is excluded from the SL resource pool candidate slot set.

By way of example, the first preset number is X, the second preset number is X - 1, the third preset number is Z, and the start symbol is denoted as Y.

In an example, if at least one of the X SL symbols in a slot overlaps the idle phase, this slot is excluded from the sidelink candidate slot set. In an embodiment, at least one of the Yth symbol to the (Y + X - 1)th symbol in the slot overlaps the idle phase. Y is determined by the configured SL start symbol. X is determined by the length or number of the configured SL symbols. The X SL symbols start from the Yth symbol.

In an example, if at least one of the first X - 1 symbols among the X SL symbols in a slot overlaps the idle phase, this slot is excluded from the sidelink candidate slot set. In an embodiment, at least one of the Yth symbol to the (Y + X - 2)th symbol in the slot overlaps the idle phase. Y is determined by the configured SL start symbol. X is determined by the length or number of the configured SL symbols. In this embodiment, the last SL symbol is generally used as a guard period (GP) and is not used for actual transmission. Therefore, it is acceptable for the last SL symbol to overlap the idle phase.

In an example, if at least Z of the X SL symbols in a slot overlaps the idle phase, this slot is excluded from the sidelink resource pool candidate slot set. In an embodiment, at least Z of the Yth symbol to the (Y + X - 1)th symbol in the slot overlaps the idle phase. Y is determined by the configured SL start symbol. X is determined by the length or number of the configured SL symbols. That is, if the number of available SL symbols that do not overlap the idle phase is less than the first threshold, this slot is excluded. For example, when X = 14 and Z = 13, if the number of symbols overlapping the idle phase is greater than or equal to 13, the number of the remaining SL symbols is less than or equal to 1, and thus this slot is excluded.

In an example, different candidate slots may have different available SL symbols. If the number of available symbols in an SL slot is greater than or equal to the first threshold but less than the second threshold, this slot is used for carrying a particular SL signal. For example, if the number of available symbols is greater than or equal to 2 but less than or equal to 7, this slot can carry only a PSFCH, an SL trigger signal, or a reference signal and cannot carry other channels such as a PSSCH. In an example, if a slot in the resource pool cannot carry a PSSCH, this slot is excluded from candidate resources for carrying the PSSCH. Alternatively, if a resource selected for a PSSCH overlaps the idle phase, transmission of the PSSCH on this resource is abandoned.

In an embodiment, this embodiment illustrates how to avoid an overlap between an SL resource pool and the idle phase in the FBE mode, that is, avoid an overlap between the sidelink resource pool slot set

$$\left( t_0^{'SL}, \ t_1^{'SL}, \ t_2^{'SL}, \ldots\ldots, \ t_{T_{\max}'-1}^{'SL} \right)$$

and the idle phase. In an example, the process by which the communication node determines slots contained in the sidelink resource pool slot set

$$\left( t_0^{'SL}, \ t_1^{'SL}, \ t_2^{'SL}, \ldots\ldots, \ t_{T_{\max}'-1}^{'SL} \right)$$

includes the following manners.

First, the preceding S1 is performed according to the sidelink time domain resource configuration parameter, and the sidelink candidate slot set is selected from 10240 * $2^\mu$ physical slots contained in a frame number period of 10240 ms.

Then, the preceding S2 is performed according to the sidelink resource pool slot bitmap in the sidelink time domain resource configuration parameter, and the slot set initially contained in the resource pool is selected from the sidelink candidate slot set.

Finally, slots overlapping the idle phase are excluded from the slot set initially contained in the resource pool according to the sidelink semi-static access parameter. In this manner, slots contained in the resource pool (that is, slots contained in the sidelink resource pool slot set in this embodiment) are determined. In an embodiment, if the network configures the mode of use of the unlicensed spectrum as semi-static and if a particular symbol in a slot overlaps the idle phase, this slot is excluded from the SL resource pool slot set.

By way of example, the first preset number is X, the second preset number is X - 1, the third preset number is Z, and the start symbol is denoted as Y.

In an example, if at least one of the X SL symbols in a slot overlaps the idle phase, this slot is excluded from the sidelink resource pool slot set. In an embodiment, at least one of the Yth symbol to the (Y + X - 1)th symbol in the slot overlaps the idle phase. Y is determined by the configured SL start symbol. X is determined by the length or number of the configured SL symbols. The X SL symbols start from the Yth symbol.

In an example, if at least one of the first X - 1 symbols among the X SL symbols in a slot overlaps the idle phase, this slot is excluded from the sidelink resource pool slot set. In an embodiment, at least one of the Yth symbol to the (Y + X - 2)th symbol in the slot overlaps the idle phase. Y is determined by the configured SL start symbol. X is determined by the length or number of the configured SL symbols. In this embodiment, the last SL symbol is generally used as a guard period (GP) and is not used for actual transmission. Therefore, it is acceptable for the last SL symbol to overlap the idle phase.

In an example, if at least Z of the X SL symbols in a slot overlaps the idle phase, this slot is excluded from the sidelink resource pool slot set. In an embodiment, at least Z of the Yth symbol to the (Y + X - 1)th symbol in the slot overlaps the idle phase. Y is determined by the configured SL start symbol. X is determined by the length or number of the configured SL symbols. That is, if the number of available SL symbols that do not overlap the idle phase is less than the first threshold, this slot is excluded. For example, when X = 14 and Z = 13, if the number of symbols overlapping the idle phase is greater than or equal to 13, the number of the remaining SL symbols is less than or equal to 1, and thus this slot is excluded.

In an example, different resource pool slots may have different available SL symbols. If the number of available symbols in an SL slot is greater than or equal to the first threshold but less than the second threshold, this slot is used for carrying a particular SL signal. For example, if the number of available symbols is greater than or equal to 2 but less than or equal to 7, this slot can carry only a PSFCH, an SL trigger signal, or a reference signal and cannot carry other channels such as a PSSCH. In an example, if a slot in the resource pool cannot carry a PSSCH, this slot is excluded from candidate resources for carrying the PSSCH. Alternatively, if a resource selected for a PSSCH overlaps the idle phase, transmission of the PSSCH on this resource is abandoned.

In an embodiment, when slots contained in the

$$\left( t_0^{SL}, t_1^{SL}, \cdots, t_{T_{\max}-1}^{SL} \right)$$

sidelink candidate slot set are determined, in addition to the slot set (denoted as set S1) containing a particular symbol overlapping the idle phase, other slots are excluded. In an embodiment, determining the sidelink candidate slot set includes that

$$0 \le t_i^{SL} < 10240 \times 2^{\mu}, 0 \le i < T_{max}$$

.

The slot number is relative to the number of the first slot of the first frame in the frame number period.

In an example, the sidelink candidate slot set contains slots other than at least one of the following slot sets: a slot set (set S2) for transmission of a synchronization signal block, a non-sidelink slot set (set S3), or a reserved slot set (set S4).

Set S2 is configured for transmission of a synchronization signal block (SSB). The number of slots in set S2 is denoted as $N_{S-SSB}$.

In an example, if at least one of the X SL symbols in a slot is not configured for uplink, this slot is incorporated into set S3 and excluded from the SL resource pool candidate slot set. The number of slots in set S3 is denoted as $N_{nonSL}$.

In an example, if a semi-static channel access mode is configured, slots contained in the slot set (set S1) containing a particular symbol overlapping the idle phase are excluded. The number of slots in set S1 is denoted as $N_{Idle}$.

In an example, reserved slots determined in the following manner are incorporated into the reserved slot set (set S4). The number of slots in set S4 is denoted as $N_{reserved}$.

First, $N_{Idle}$ slots, $N_{S-SSB}$ slots, and $N_{nonSL}$ slots are excluded from S1, S2, and S3 respectively; and then the remaining slots are sorted in ascending order of slot numbers to form the set ($l_0, l_1, \cdots, l_{Nmax-1}$).

Then, if a slot $l_r$ ($0 \le r < Nmax$) satisfies

$$r = \left\lfloor \frac{m \cdot Nmax)}{N_{reserved}} \right\rfloor$$

, where m = 0,1, $\cdots$, $N_{reserved}$ - 1, and $N_{reserved}$ = (Nmax) mod $L_{bitmap}$, then $L_{bitmap}$ is the bit length of the sidelink resource pool slot bitmap configured by the higher layer.

In an example, $L_{bitmap}$ may be equal to the number of slots contained in a semi-static channel access period $T_u^{SL}$.

Finally, the remaining slots are sorted in ascending order of slot numbers to form the set

$$(t_0^{SL}, t_1^{SL}, \cdots, t_{Tmax-1}^{SL})$$

.

In an example, $N_{S-SSB}$ and $N_{nonSL}$ may be not considered. That is, one or two of the two are 0.

In an example, if slots corresponding to $N_{S-SSB}$, $N_{nonSL}$, and $N_{Idle}$ do not overlap each other, Nmax = (10240 × $2^{\mu}$ - $N_{S-SSB}$ - $N_{nonSL}$ - $N_{Idle}$); and if slots corresponding to $N_{S-SSB}$ and $N_{Idle}$ overlap each other, the overlapping slots are excluded only once and are not excluded multiple times, and overlapping slots are considered for the corresponding Nmax value. For example, a slot corresponding to $N_{Idle}$, is a slot satisfying the slot features of S1 and not satisfying the slot features of $N_{S-SSB}$ and $N_{nonSL}$.

In an embodiment, when slots contained in the

$$\left( t_0^{SL}, t_1^{SL}, \cdots, t_{T_{\max}-1}^{SL} \right)$$

sidelink candidate slot set are determined, in addition to excluding slots in S1, S2, S3, and S4, configuration by the network also includes configuration of indication about the SL access period. In an example, a bitmap ($b_0$, $b_1$, ... , $b_{L_1-1}$) of length $L_1$ is configured to indicate which channel access periods can be used for SL communication in a certain period of time. In an example, the period of time is a frame number period (for example, 10240 ms), so semi-static access periods in the frame number period are sequentially numbered. If $b_{i'}$ = 1, then the access period $T_u^{SL}$ numbered i can be used for SL communication, where i' = i mod $L_1$. In an example, the period of time is a double-frame period (for example, 20 ms between two even frame boundaries), so semi-static access periods in the double-frame period are sequentially numbered. If $b_{i'}$ = 1, then the access period $T_u^{SL}(i)$ numbered i can be used for SL communication, where i' = i mod $L_1$. In an example, $L_1$ is equal to the number of semi-static access periods in the double-frame period.

If the access period of a slot is not available for SL communication, this slot is excluded from the SL resource pool candidate slot set. Similarly, if this slot overlaps slots corresponding to $N_{S-SSB}$, $N_{nonSL}$, and $N_{Idle}$, the overlapping slots are excluded only once.

In an example, when the network configures an SL resource or an SL resource pool, the first slot of the semi-static access period is considered. For example, a resource for transmission of an S-SSB is configured to be located in the first slot of the semi-static access period.

In an embodiment, as described in the previous embodiments, the network may configure the trigger phase at the beginning of the sidelink semi-static channel access period.

In an example, the trigger phase (denoted as $T_I^{SL}$) in the sidelink semi-static channel access period is used for transmission of the trigger signal. In an embodiment, the trigger signal configuration parameter includes at least one of the following: the number of symbols occupied by the trigger signal, the frequency domain position of the trigger signal, or the format of the trigger signal.

The number of symbols occupied by the trigger signal (that is, the total length of the occupied symbols) is less than or equal to the length of the trigger phase (that is, the first preset duration in the previous embodiments).

In an embodiment, the trigger signal may occupy one or more consecutive or discrete frequency domain resource blocks (RBs). In an embodiment, the discrete frequency-domain RBs may be one or more interlace RBs.

In an example, the trigger signal may use the format of other SL signals, such as a physical sidelink feedback channel (PSFCH), physical sidelink shared channel (PSSCH), physical sidelink control channel (PSCCH), sidelink synchronization signal block (S-SSB), and sidelink reference signal. The S-SSB is defined by sidelink primary synchronization signals (SPSS), sidelink secondary synchronization signals (SSSS), and physical sidelink broadcast channel (PSBCH).

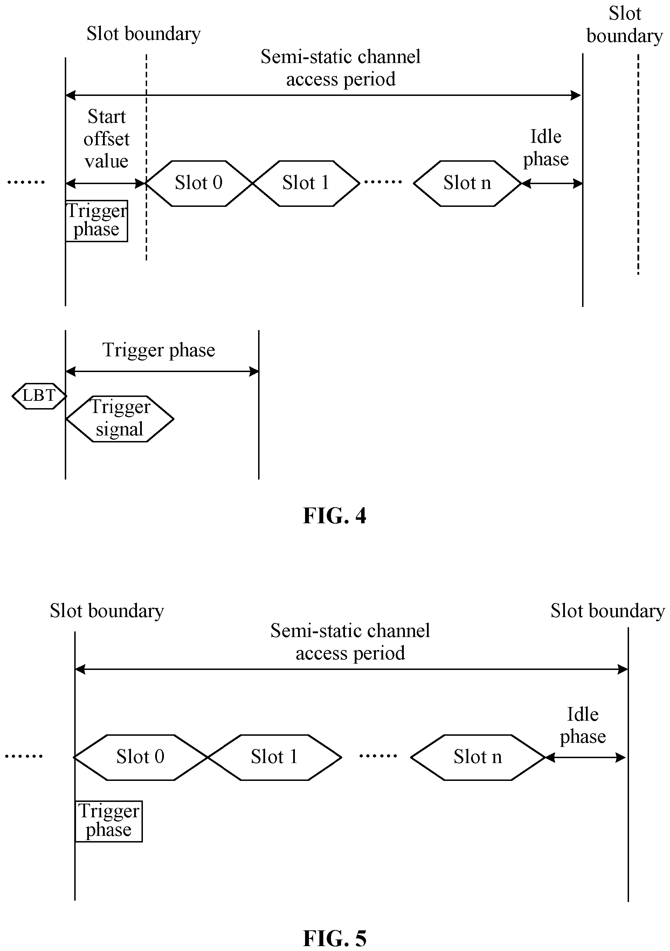

FIG. 4 is a configuration diagram of a semi-static channel access period according to an embodiment of the present application. As shown in FIG. 4, when $T_o^{SL}$ is negative, the start point of the semi-static channel access period is located before the reference point. In an example, the trigger phase $T_I^{SL}$ is less than or equal to $-T_o^{SL}$, and the number of symbols occupied by the trigger signal (that is, the length of the occupied symbols) is less than or equal to the duration $T_I^{SL}$ of the trigger phase.

FIG. 5 is a configuration diagram of a semi-static channel access period according to an embodiment of the present application. In an embodiment, $T_o^{SL}$ is 0 or not configured. As shown in FIG. 5, the trigger phase $T_I^{SL}$ occupies some symbols in slot 0, and the number of symbols occupied by the trigger signal (that is, the length of the occupied symbols) is less than or equal to the duration $T_I^{SL}$ of the trigger phase, so the duration available for sending other SL signals in slot 0 is reduced.

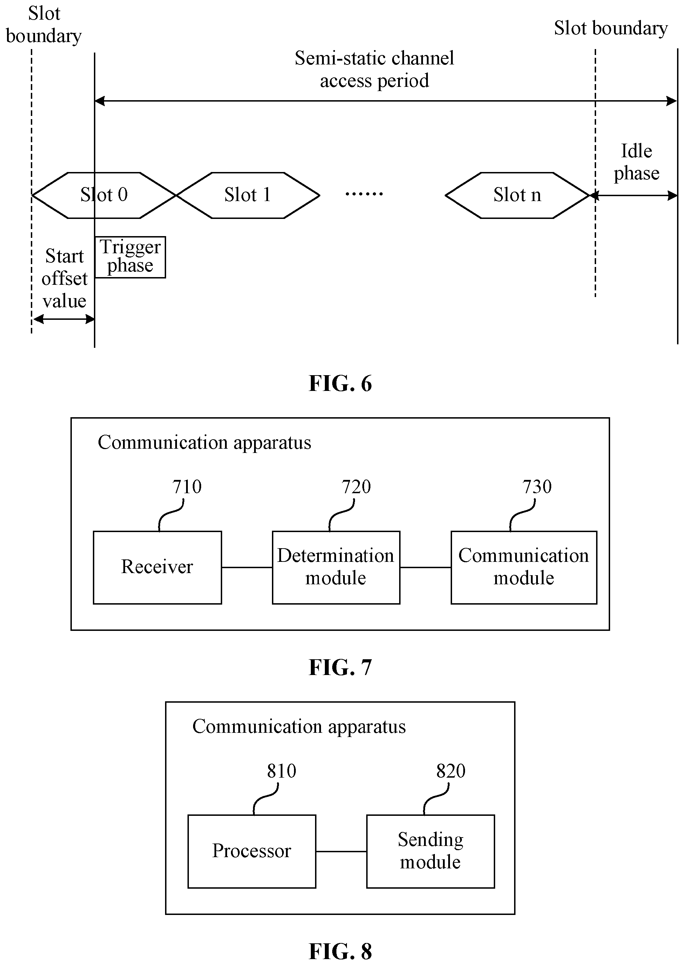

FIG. 6 is a configuration diagram of a semi-static channel access period according to an embodiment of the present application. In an embodiment, when $T_o^{SL}$ is positive, the start point of the semi-static channel access period is located after the reference point. As shown in FIG. 6, the trigger phase $T_I^{SL}$ occupies some symbols of slot 0, for example, less than or equal to $(T_{slot} - T_o^{SL})$, where $T_{slot}$ denotes the slot length of at least one slot, and the number of symbols occupied by the trigger signal (that is, the length of the occupied symbols) is less than or equal to the duration $T_I^{SL}$ of the trigger phase, so the duration available for sending other SL signals in slot 0 is shortened or 0.

In an embodiment, described is the process by which the communication node (for example, the UE) sends a trigger signal and enables channel occupancy in semi-static access period j as the first semi-static access period in slot i by way of example. By way of example, the third preset duration is $T_{sensing}$, and the first slot is slot i.

In an embodiment, based on resource allocation mode 1 or resource allocation mode 2, the UE may be allocated all or some of the symbols in SL slot i for SL transmission. If the current configuration is semi-static access, the UE accesses the channel in semi-static access period j in slot i. SL transmission may occur across multiple consecutive slots, referred to as a transmission burst. In this embodiment of the present application, SL transmission may be an SL transmission burst. The following description uses SL transmission as an example.

In an example, the process by which the UE enables channel occupancy in semi-static access period j is described as follows.

First, the UE performs LBT sensing in $T_{sensing}$ before the start time of semi-static access period j. If it is determined that the channel is idle, the UE sends a trigger signal and enables channel occupancy at the start time of semi-static access period j. In an embodiment, the trigger signal configuration parameter includes at least one of the following: the number of symbols occupied by the trigger signal, the frequency domain position of the trigger signal, or the format of the trigger signal. In an example, $T_{sensing}$ refers to the duration of one sensing slot, for example, 9 $\mu$s, or the duration of a sensing slot as defined by other protocols.

Then, after sending the trigger signal and enabling channel occupancy, the process for the UE to access the channel in slot i is described as follows. If the interval between the transmission by the UE in slot i and the previous sidelink transmission by the UE or by any other UE in semi-static access period j is greater than the fourth preset duration, the UE performs LBT sensing in the fifth preset duration before transmission. If it is determined that the channel is idle, the UE can perform transmission in slot i. In an example, the fifth preset duration may be $T_{sensing}$. In another example, the fifth preset duration is within the sixth preset duration, with the fifth preset duration set to 9 $\mu$s and the sixth preset duration set to 25 $\mu$s. In an example, the fourth preset duration may be 16 $\mu$s.

If the interval between the transmission by the UE in slot i and its last transmission or the transmission by any other UE is not greater than the fourth preset duration, the UE may perform transmission in slot i without performing LBT sensing.

The UE is required to ensure that all its transmissions are completed within semi-static access period j and not within the idle phase.

In another example, that the UE enables channel occupancy in semi-static access period j also includes that SL slot i allocated to the UE is the first slot in semi-static access period j.

In an embodiment, described is the process by which the communication node (for example, the UE) shares channel occupancy of another UE in semi-static access period j as the second semi-static access period in slot i by way of example.

In an embodiment, based on resource allocation mode 1 or resource allocation mode 2, the UE may be allocated all or some of the symbols in SL slot i for SL transmission. In an example, if the current configuration is a semi-static access mode, the UE may not enable channel occupancy, but share channel occupancy of another UE to access the channel in slot i.

In an example, the process by which the UE shares channel occupancy of another UE in semi-static access period j includes that the condition under which the UE shares channel occupancy enabled by another UE includes that the UE detects that another UE enables channel occupancy.

In an example, the condition under which the UE shares channel occupancy enabled by another UE may include at least one of the following: a trigger signal of another UE is detected at the start time of semi-static access period j; sidelink transmission by another UE is detected in semi-static access period j; or channel occupancy sharing information sent by another UE is detected by the UE, where the channel occupancy sharing information includes at least one of the following: remaining channel occupancy duration, a channel access priority level, or a channel sharing target identifier.

In an example, the condition under which the UE shares channel occupancy enabled by another UE may also include one of the following: the channel access priority level of the UE is higher than or equal to the channel access priority level indicated by another UE whose channel occupancy is enabled; or the UE is a UE determined by or a UE in a UE set determined by a channel sharing target identifier indicated by another UE whose channel occupancy is enabled.

In an example, the condition under which the UE shares channel occupancy enabled by another UE may also include that a destination device for sidelink transmission by the UE includes at least another UE whose channel occupancy is enabled.

In an example, the condition under which the UE shares channel occupancy enabled by another UE may also include that a resource for sidelink transmission by the UE does not overlap a resource reserved by another UE whose channel occupancy is enabled.

In an embodiment, the condition under which the UE shares channel occupancy enabled by another UE varies with different channels. For special SL signals like PSFCH, reference signals, and synchronization signals, the UE can share the channel occupancy simply by detecting trigger signals or sidelink transmissions from another UE. For data channels, such as PSCCH/PSSCH transmissions, it is required to satisfy at least one of the following conditions: the channel access priority level of the UE is higher than or equal to the channel access priority level indicated by another UE whose channel occupancy is enabled; the UE is a UE determined by or a UE in a UE set determined by a channel sharing target identifier indicated by another UE whose channel occupancy is enabled; or a destination device for sidelink transmission by the UE includes at least another UE whose channel occupancy is enabled.

In an embodiment, when the UE shares channel occupancy of another UE, the process for the UE to access the channel in slot i is described as follows. If the interval between the transmission by the UE in slot i and the previous sidelink transmission by the UE or by any other UE in semi-static access period j is greater than the fourth preset duration, the UE performs LBT sensing in the fifth preset duration before transmission. If it is determined that the channel is idle, the UE can perform transmission in slot i. In an example, the fifth preset duration may be $T_{sensing}$. In another example, the fifth preset duration is within the sixth preset duration, with the fifth preset duration set to 9 $\mu$s and the sixth preset duration set to 25 $\mu$s. In an embodiment, the fourth preset duration is 16 $\mu$s.

If the interval between the transmission by the UE in slot i and its last transmission or the transmission by any other UE is less than or equal to the fourth preset duration, the UE may perform transmission in slot i without performing LBT sensing.

The UE is required to ensure that all its transmissions are completed within semi-static access period j and not within the idle phase.

In another example, that the UE shares channel occupancy of another UE in semi-static access period j also includes that the SL slot for transmission by the UE does not include the first slot of semi-static access period j.

FIG. 7 is a block diagram of a communication apparatus according to an embodiment of the present application. This embodiment is applied by a communication node. As shown in FIG. 7, the communication apparatus of this embodiment includes a receiver 710, a determination module 720, and a communication module 730.

The receiver 710 is configured to receive a sidelink semi-static access parameter and a sidelink time domain resource configuration parameter configured by a network.

The determination module 720 is configured to determine a sidelink resource pool slot set based on the sidelink semi-static access parameter and the sidelink time domain resource configuration parameter.

The communication module 730 is configured to perform sidelink communication based on at least one slot in the sidelink resource pool slot set.

In an embodiment, the sidelink semi-static access parameter includes at least one of the following: the start offset value of a semi-static channel access period, the trigger phase of a semi-static channel access period, or the idle phase of a semi-static channel access period.

In an embodiment, the sidelink time domain resource configuration parameter includes at least one of the following: a sidelink resource pool slot bitmap, a synchronization signal block slot set, time division duplex configuration information, or sidelink slot symbol configuration information.

In an embodiment, the determination module 720 includes a first determination unit and a second determination unit.

The first determination unit is configured to determine a sidelink candidate slot set based on the sidelink semi-static access parameter and the sidelink time domain resource configuration parameter. The second determination unit is configured to determine the sidelink resource pool slot set from the sidelink candidate slot set based on the sidelink resource pool slot bitmap.

In an embodiment, the trigger phase includes a first preset duration after the start time of the semi-static channel access period; and the first preset duration is determined based on one of the following: the start offset value of the semi-static channel access period, the slot length of at least one slot, or a length configured using the sidelink semi-static access parameter.

In an embodiment, the sidelink candidate slot set includes a set other than at least one of the following slot sets: a slot set containing a particular symbol overlapping an idle phase, a slot set for transmission of a synchronization signal block, a non-sidelink slot set, or a reserved slot set.

In an embodiment, the number of particular symbols overlapping the idle phase satisfies one of the following conditions: at least one sidelink symbol among a first preset number of sidelink symbols in a slot; at least one sidelink symbol among first second preset number of sidelink symbols among a first preset number of sidelink symbols in a slot; or at least a third preset number of sidelink symbols among a first preset number of sidelink symbols in a slot. The second preset number is the first preset number minus one. The first preset number of sidelink symbols in the slot include the first preset number of symbols after a start symbol determined by the sidelink slot symbol configuration information. The first preset number is determined by a configured number of sidelink symbols. The difference value between the first preset number and the third preset number is less than a first threshold.

In an embodiment, the difference value between the first preset number and the third preset number is greater than the first threshold and less than a second threshold, and the slot is configured to carry a particular sidelink signal. The particular sidelink signal includes one of the following: a feedback signal, a sidelink trigger signal, or a reference signal.

In an embodiment, the sidelink semi-static access parameter includes a first bitmap of a first preset length. The first bitmap is configured to indicate a semi-static channel access period configured for sidelink communication in a second preset duration.

In an embodiment, the sidelink candidate slot set includes a set other than a slot set consisting of slots contained in a semi-static channel access period indicated by the first bitmap as not configured for sidelink communication.

In an embodiment, determining the reserved slot set includes determining the number of slots contained in the reserved slot set based on the number of slots contained in a first slot set and the length of the sidelink resource pool slot bitmap, where the number of slots contained in the first slot set is the difference value between the total number of slots in a third preset duration and the number of slots contained in a second slot set; the first slot set is the difference set between the slots in the third preset duration and the slots contained in the second slot set; and a slot in the second slot set satisfies at least one of the following: a slot containing a particular symbol overlapping the idle phase, a slot for transmission of a synchronization signal block, a non-sidelink slot, or a slot contained in a semi-static channel access period not configured for sidelink communication; and determining the reserved slot set by determining the slot index of a reserved slot in the first slot set, where the slot index of the reserved slot satisfies the floor value of the ratio of the product of a first preset value and the number of slots contained in the first slot set to the number of slots contained in the reserved slot set, where the first preset value is a non-negative integer less than the number of slots contained in the reserved slot set.

In an embodiment, the communication apparatus applied by the communication node also includes a receiver and a communication module.

The receiver is configured to receive a trigger signal configuration parameter configured by the network. The communication module is configured to send a trigger signal and enable channel occupancy based on the trigger signal configuration parameter in a first semi-static access period. The first semi-static access period is an access period of a first slot. The first slot is a slot allocated for the communication node to perform sidelink communication. The first slot is a slot in the sidelink resource pool slot set.

In an embodiment, the communication apparatus applied by the communication node also includes a detection module.

The detection module is configured to perform listen-before-talk (LBT) in a third preset duration before the start time of the first semi-static access period.

In an embodiment, the trigger signal configuration parameter includes at least one of the following: the number of symbols occupied by the trigger signal, the frequency domain position of the trigger signal, or the format of the trigger signal.

In an embodiment, the communication apparatus applied by the communication node also includes a receiver and a sharing module.

The receiver is configured to receive a shared channel occupancy condition configured by the network. The sharing module is configured to share channel occupancy of another communication node according to the shared channel occupancy condition in a second semi-static access period. The second semi-static access period is an access period of a second slot. The second slot is a slot allocated for the communication node to perform sidelink communication. The second slot is a slot in the sidelink resource pool slot set.

In an embodiment, the shared channel occupancy condition includes at least one of the following: a trigger signal of another communication node is detected at the start time of the second semi-static access period; sidelink transmission by another communication node is detected in the second semi-static access period; channel occupancy sharing information sent by another communication node is detected, where the channel occupancy sharing information includes at least one of the following: remaining channel occupancy duration, a channel access priority level, or a channel sharing target identifier; the channel access priority level of the communication node is higher than or equal to the channel access priority level indicated by another communication node whose channel occupancy is enabled; the communication node is a communication node determined by or a communication node in a communication node set determined by a channel sharing target identifier indicated by another communication node whose channel occupancy is enabled; a destination device for sidelink transmission by the communication node includes at least another communication node whose channel occupancy is enabled; or a resource for sidelink transmission by the communication node does not overlap a resource reserved by another communication node whose channel occupancy is enabled.

In an embodiment, the communication apparatus applied by the communication node also includes an access module.

The access module is configured to perform a channel access process before the first slot or the second slot.

In an embodiment, the channel access process includes one of the following: in response to the interval between sidelink transmission in the first slot and previous sidelink transmission in the first semi-static access period being greater than a fourth preset duration, the communication node performs LBT sensing in a fifth preset duration before the transmission in the first slot; in response to the interval between sidelink transmission in the first slot and sidelink transmission by another communication node in the first semi-static access period being greater than a fourth preset duration, the communication node performs LBT sensing in a fifth preset duration before the transmission in the first slot; in response to the interval between sidelink transmission in the first slot and previous sidelink transmission being less than or equal to a fourth preset duration, the communication node performs sidelink transmission in the first slot; in response to the interval between sidelink transmission in the first slot and sidelink transmission by another communication node being less than or equal to a fourth preset duration, the communication node performs sidelink transmission in the first slot; or sidelink transmission by the communication node is performed in a slot other than an idle phase in the first semi-static access period.

The communication apparatus of this embodiment is configured to implement the communication method applied by the communication node according to the embodiment shown in FIG. 2 and has similar implementation principles and technical effects. The details are not repeated here.

FIG. 8 is a block diagram of another communication apparatus according to an embodiment of the present application. This embodiment is applied by a network. As shown in FIG. 8, the communication apparatus of this embodiment includes a processor 810 and a sending module 820.

The processor 810 is configured to configure a sidelink semi-static access parameter and a sidelink time domain resource configuration parameter.

The sending module 820 is configured to send the sidelink semi-static access parameter and the sidelink time domain resource configuration parameter to a communication node to enable the communication node to determine a sidelink resource pool slot set based on the sidelink semi-static access parameter and the sidelink time domain resource configuration parameter and perform sidelink communication based on at least one slot in the sidelink resource pool slot set.

In an embodiment, the communication apparatus applied by the network also includes a sending module.

The sending module is configured to send a preconfigured trigger signal configuration parameter to the communication node to enable the communication node to send a trigger signal and enable channel occupancy based on the trigger signal configuration parameter in a first semi-static access period. The first semi-static access period is an access period of a first slot. The first slot is a slot allocated for the communication node to perform sidelink communication. The first slot is a slot in the sidelink resource pool slot set.

In an embodiment, the communication apparatus applied by the network also includes a sending module.

The sending module is configured to send a preconfigured shared channel occupancy condition to the communication node to enable the communication node to share channel occupancy of another communication node according to the shared channel occupancy condition in a second semi-static access period.

The second semi-static access period is an access period of a second slot. The second slot is a slot allocated for the communication node to perform sidelink communication. The second slot is a slot in the sidelink resource pool slot set.

In an embodiment, the sidelink semi-static access parameter includes at least one of the following: the start offset value of a semi-static channel access period, the trigger phase of a semi-static channel access period, or the idle phase of a semi-static channel access period.

In an embodiment, the sidelink time domain resource configuration parameter includes at least one of the following: a sidelink resource pool slot bitmap, a synchronization signal block slot set, time division duplex configuration information, or sidelink slot symbol configuration information.

In an embodiment, the communication node determines a sidelink resource pool slot set based on the sidelink semi-static access parameter and the sidelink time domain resource configuration parameter in the following manner:

The communication node determines a sidelink candidate slot set based on the sidelink semi-static access parameter and the sidelink time domain resource configuration parameter. The communication node determines the sidelink resource pool slot set from the sidelink candidate slot set based on the sidelink resource pool slot bitmap.

In an embodiment, the trigger phase includes a first preset duration after the start time of the semi-static channel access period; and the first preset duration is determined based on one of the following: the start offset value of the semi-static channel access period, the slot length of at least one slot, or a length configured using the sidelink semi-static access parameter.

In an embodiment, the sidelink candidate slot set includes a set other than at least one of the following slot sets: a slot set containing a particular symbol overlapping an idle phase, a slot set for transmission of a synchronization signal block, a non-sidelink slot set, or a reserved slot set.

In an embodiment, the number of particular symbols overlapping the idle phase satisfies one of the following conditions: at least one sidelink symbol among a first preset number of sidelink symbols in a slot; at least one sidelink symbol among first second preset number of sidelink symbols among a first preset number of sidelink symbols in a slot; or at least a third preset number of sidelink symbols among a first preset number of sidelink symbols in a slot. The second preset number is the first preset number minus one. The first preset number of sidelink symbols in the slot include the first preset number of symbols after a start symbol determined by the sidelink slot symbol configuration information. The first preset number is determined by a configured number of sidelink symbols. The difference value between the first preset number and the third preset number is less than a first threshold.

In an embodiment, the difference value between the first preset number and the third preset number is greater than the first threshold and less than a second threshold, and the slot is configured to carry a particular sidelink signal. The particular sidelink signal includes one of the following: a feedback signal, a sidelink trigger signal, or a reference signal.

In an embodiment, the sidelink semi-static access parameter includes a first bitmap of a first preset length. The first bitmap is configured to indicate a semi-static channel access period configured for sidelink communication in a second preset duration.

In an embodiment, the sidelink candidate slot set includes a set other than a slot set consisting of slots contained in a semi-static channel access period indicated by the first bitmap as not configured for sidelink communication.

In an embodiment, determining the reserved slot set includes determining the number of slots contained in the reserved slot set based on the number of slots contained in a first slot set and the length of the sidelink resource pool slot bitmap, where the number of slots contained in the first slot set is the difference value between the total number of slots in a third preset duration and the number of slots contained in a second slot set; the first slot set is the difference set between the slots in the third preset duration and the slots contained in the second slot set; and a slot in the second slot set satisfies at least one of the following: a slot containing a particular symbol overlapping the idle phase, a slot for transmission of a synchronization signal block, a non-sidelink slot, or a slot contained in a semi-static channel access period not configured for sidelink communication; and determining the reserved slot set by determining the slot index of a reserved slot in the first slot set, where the slot index of the reserved slot satisfies the floor value of the ratio of the product of a first preset value and the number of slots contained in the first slot set to the number of slots contained in the reserved slot set, where the first preset value is a non-negative integer less than the number of slots contained in the reserved slot set.

In an embodiment, the trigger signal configuration parameter includes at least one of the following: the number of symbols occupied by the trigger signal, the frequency domain position of the trigger signal, or the format of the trigger signal.

In an embodiment, the shared channel occupancy condition includes at least one of the following: a trigger signal of another communication node is detected at the start time of the second semi-static access period; sidelink transmission by another communication node is detected in the second semi-static access period; channel occupancy sharing information sent by another communication node is detected, where the channel occupancy sharing information includes at least one of the following: remaining channel occupancy duration, a channel access priority level, or a channel sharing target identifier; the channel access priority level of the communication node is higher than or equal to the channel access priority level indicated by another communication node whose channel occupancy is enabled; the communication node is a communication node determined by or a communication node in a communication node set determined by a channel sharing target identifier indicated by another communication node whose channel occupancy is enabled; a destination device for sidelink transmission by the communication node includes at least another communication node whose channel occupancy is enabled; or a resource for sidelink transmission by the communication node does not overlap a resource reserved by another communication node whose channel occupancy is enabled.

The communication apparatus of this embodiment is configured to implement the communication method applied by the network according to the embodiment shown in FIG. 3 and has similar implementation principles and technical effects. The details are not repeated here.

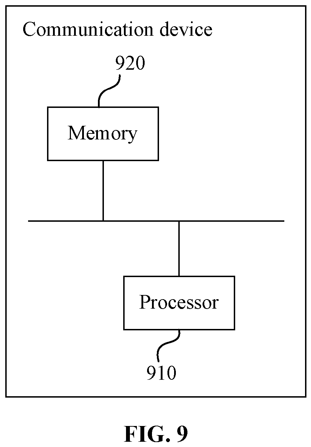

FIG. 9 is a diagram illustrating the structure of a communication device according to an embodiment of the present application. As shown in FIG. 9, the device of the present application includes a processor 910 and a memory 920. One or more processors 910 may be configured in the device. FIG. 9 uses one processor 910 as an example. One or more memories 920 may be configured in the device. FIG. 9 uses one memory 920 as an example. The processor 910 and the memory 920 of the device may be connected by a bus or in other manners. FIG. 9 uses connection by a bus as an example. In this embodiment, the device may be a communication node. By way of example, the communication node may be a terminal.

As a computer-readable storage medium, the memory 920 may be configured to store software programs, computer-executable programs, and modules, such as program instructions/modules corresponding to the device of any embodiment of the present application (for example, the receiver 710, the determination module 720, and the communication module 730 in the communication apparatus). The memory 920 may include a program storage region and a data storage region. The program storage region may store an operating system and an application program required by at least one function. The data storage region may store data created according to the use of the device. Additionally, the memory 920 may include a highspeed random-access memory or a nonvolatile memory such as at least one disk memory, a flash memory or another nonvolatile solid-state memory. In some examples, the memory 920 may be a memory remote from the processor 910 and connectable to the device by a network. Examples of the network include, but are not limited to, the Internet, an intranet, a local area network, a mobile communication network, and a combination thereof.

In the case where the communication device is a communication node, the preceding device may be configured to perform the communication method applied by the communication node according to any previous embodiment and has corresponding functions and effects.

In the case where the communication device is a network, the preceding device may be configured to perform the communication method applied by the network according to any previous embodiment and has corresponding functions and effects.

An embodiment of the present application provides a storage medium storing computer-executable instructions which, when executed by a computer processor, cause the processor to perform a communication method applied by a communication node. The communication method applied by the communication node includes receiving a sidelink semi-static access parameter and a sidelink time domain resource configuration parameter configured by a network; determining a sidelink resource pool slot set based on the sidelink semi-static access parameter and the sidelink time domain resource configuration parameter; and performing sidelink communication based on at least one slot in the sidelink resource pool slot set.

An embodiment of the present application provides a storage medium storing computer-executable instructions which, when executed by a computer processor, cause the processor to perform a communication method applied by a network. The communication method applied by the network includes configuring a sidelink semi-static access parameter and a sidelink time domain resource configuration parameter; and sending the sidelink semi-static access parameter and the sidelink time domain resource configuration parameter to a communication node to enable the communication node to determine a sidelink resource pool slot set based on the sidelink semi-static access parameter and the sidelink time domain resource configuration parameter and perform sidelink communication based on at least one slot in the sidelink resource pool slot set.

It is to be understood by those skilled in the art that the term "user equipment" encompasses any suitable type of wireless user equipment, for example, a mobile phone, a portable data processing apparatus, a portable web browser or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules and functions, or may represent a combination of program operations and logic circuits, modules and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

**Claims**

1. A communication method, the method being applied by a communication node and comprising:

    receiving a sidelink semi-static access parameter and a sidelink time domain resource configuration parameter configured by a network;
    determining a sidelink resource pool slot set based on the sidelink semi-static access parameter and the sidelink time domain resource configuration parameter; and
    performing sidelink communication based on at least one slot in the sidelink resource pool slot set.

2. The method of claim 1, wherein the sidelink semi-static access parameter comprises at least one of the following: a start offset value of a semi-static channel access period, a trigger phase of a semi-static channel access period, or an idle phase of a semi-static channel access period.

3. The method of claim 1, wherein the sidelink time domain resource configuration parameter comprises at least one of the following: a sidelink resource pool slot bitmap, a synchronization signal block slot set, time division duplex configuration information, or sidelink slot symbol configuration information.

4. The method of claim 3, wherein determining the sidelink resource pool slot set based on the sidelink semi-static access parameter and the sidelink time domain resource configuration parameter comprises:

    determining a sidelink candidate slot set based on the sidelink semi-static access parameter and the sidelink time domain resource configuration parameter; and
    determining the sidelink resource pool slot set from the sidelink candidate slot set based on the sidelink resource pool slot bitmap.

5. The method of claim 2, wherein the trigger phase comprises a first preset duration after a start time of the semi-static channel access period; and
   the first preset duration is determined based on one of the following: the start offset value of the semi-static channel access period, a slot length of at least one slot, or a length configured by the sidelink semi-static access parameter.

6. The method of claim 4, wherein the sidelink candidate slot set comprises a set other than at least one of the following slot sets:
   a slot set containing a particular symbol overlapping an idle phase, a slot set for transmission of a synchronization signal block, a non-sidelink slot set, or a reserved slot set.

7. The method of claim 6, wherein a number of particular symbols overlapping the idle phase satisfies one of the following conditions: at least one sidelink symbol among a first preset number of sidelink symbols in a slot; at least one sidelink symbol among first second preset number of sidelink symbols among a first preset number of sidelink symbols in a slot; or at least a third preset number of sidelink symbols among a first preset number of sidelink symbols in a slot, wherein the second preset number is the first preset number minus one; and
   the first preset number of sidelink symbols in the slot comprise the first preset number of symbols after a start symbol determined by the sidelink slot symbol configuration information, wherein the first preset number is determined by a configured number of sidelink symbols, and a difference value between the first preset number and the third preset number is less than a first threshold.

8. The method of claim 7, wherein the difference value between the first preset number and the third preset number is greater than the first threshold and less than a second threshold, and the slot is configured to carry a particular sidelink signal, wherein the particular sidelink signal comprises one of the following: a feedback signal, a sidelink trigger signal, or a reference signal.

9. The method of claim 4, wherein the sidelink semi-static access parameter comprises a first bitmap of a first preset length, wherein the first bitmap is configured to indicate a semi-static channel access period configured for sidelink communication in a second preset duration.

10. The method of claim 9, wherein the sidelink candidate slot set comprises a set other than a slot set consisting of slots contained in a semi-static channel access period indicated by the first bitmap as not configured for sidelink communication.

11. The method of claim 6, wherein determining the reserved slot set comprises:

determining a number of slots contained in the reserved slot set based on a number of slots contained in a first slot set and a length of the sidelink resource pool slot bitmap, wherein the number of slots contained in the first slot set is a difference value between a total number of slots in a third preset duration and a number of slots contained in a second slot set; the first slot set is a difference set between the slots in the third preset duration and the slots contained in the second slot set; and a slot in the second slot set satisfies at least one of the following: a slot containing theparticular symbol overlapping the idle phase, a slot for transmission of the synchronization signal block, a non-sidelink slot, or a slot contained in a semi-static channel access period not configured for sidelink communication; and
determining the reserved slot set by determining a slot index of a reserved slot in the first slot set, wherein the slot index of the reserved slot satisfies a floor value of a ratio of a product of a first preset value and the number of slots contained in the first slot set to the number of slots contained in the reserved slot set, wherein the first preset value is a non-negative integer less than the number of slots contained in the reserved slot set.

12. The method of claim 1, further comprising:

receiving a trigger signal configuration parameter configured by the network; and
sending a trigger signal and enabling channel occupancy based on the trigger signal configuration parameter in a first semi-static access period, wherein the first semi-static access period is an access period of a first slot, wherein the first slot is a slot allocated for the communication node to perform sidelink communication, and the first slot is a slot in the sidelink resource pool slot set.

13. The method of claim 12, further comprising:
performing listen-before-talk, LBT, in a third preset duration before a start time of the first semi-static access period.

14. The method of claim 12, wherein the trigger signal configuration parameter comprises at least one of the following: a number of symbols occupied by the trigger signal, a frequency domain position of the trigger signal, or a format of the trigger signal.

15. The method of claim 1, further comprising:

receiving a shared channel occupancy condition configured by the network; and
sharing channel occupancy of another communication node according to the shared channel occupancy condition in a second semi-static access period, wherein the second semi-static access period is an access period of a second slot, wherein the second slot is a slot allocated for the communication node to perform sidelink communication, and the second slot is a slot in the sidelink resource pool slot set.

16. The method of claim 15, wherein the shared channel occupancy condition comprises at least one of the following:

a trigger signal of another communication node is detected at a start time of the second semi-static access period;
sidelink transmission by another communication node is detected in the second semi-static access period;
channel occupancy sharing information sent by another communication node is detected, wherein the channel occupancy sharing information comprises at least one of the following: remaining channel occupancy duration, a channel access priority level, or a channel sharing target identifier;
a channel access priority level of the communication node is higher than or equal to a channel access priority level indicated by another communication node whose channel occupancy is enabled;
the communication node is a communication node determined by or a communication node in a communication node set determined by a channel sharing target identifier indicated by another communication node whose channel occupancy is enabled;

a destination device for sidelink transmission by the communication node comprises at least another communication node whose channel occupancy is enabled; or

a resource for sidelink transmission by the communication node does not overlap a resource reserved by another communication node whose channel occupancy is enabled.

17. The method of claim 12 or 15, further comprising: performing a channel access process before the first slot or the second slot.

18. The method of claim 17, wherein the channel access process comprises one of the following:

in response to an interval between sidelink transmission in the first slot and previous sidelink transmission in the first semi-static access period being greater than a fourth preset duration, the communication node performs LBT sensing in a fifth preset duration before the transmission in the first slot;

in response to an interval between sidelink transmission in the first slot and sidelink transmission by another communication node in the first semi-static access period being greater than a fourth preset duration, the communication node performs LBT sensing in a fifth preset duration before the transmission in the first slot;

in response to an interval between sidelink transmission in the first slot and previous sidelink transmission being less than or equal to a fourth preset duration, the communication node performs sidelink transmission in the first slot;

in response to an interval between sidelink transmission in the first slot and sidelink transmission by another communication node being less than or equal to a fourth preset duration, the communication node performs sidelink transmission in the first slot; or

sidelink transmission by the communication node is performed in a slot other than an idle phase in the first semi-static access period.

19. A communication method, the method being applied by a network and comprising:

configuring a sidelink semi-static access parameter and a sidelink time domain resource configuration parameter; and

sending the sidelink semi-static access parameter and the sidelink time domain resource configuration parameter to a communication node to enable the communication node to determine a sidelink resource pool slot set based on the sidelink semi-static access parameter and the sidelink time domain resource configuration parameter and perform sidelink communication based on at least one slot in the sidelink resource pool slot set.

20. The method of claim 19, further comprising: sending a preconfigured trigger signal configuration parameter to the communication node to enable the communication node to send a trigger signal and enable channel occupancy based on the trigger signal configuration parameter in a first semi-static access period, wherein the first semi-static access period is an access period of a first slot, wherein the first slot is a slot allocated for the communication node to perform sidelink communication, and the first slot is a slot in the sidelink resource pool slot set.

21. The method of claim 19, further comprising: sending a preconfigured shared channel occupancy condition to the communication node to enable the communication node to share channel occupancy of another communication node according to the shared channel occupancy condition in a second semi-static access period, wherein the second semi-static access period is an access period of a second slot, wherein the second slot is a slot allocated for the communication node to perform sidelink communication, and the second slot is a slot in the sidelink resource pool slot set.

22. A communication device, comprising a memory and at least one processor, wherein

the memory is configured to store at least one program; and

when executed by the at least one processor, the at least one program causes the at least one processor to perform the communication method of any one of claims 1 to 18 or the communication method of any one of claims 19 to 21.

23. A storage medium storing a computer program which, when executed by a processor, causes the processor to perform the communication method of any one of claims 1 to 18 or the communication method of any one of claims 19 to 21.

Even frame
boundary

Even frame
boundary

20ms

LBT

LBT

COT

$T_Z$

COT

$T_Z$

$T_X$

$T_X$

**FIG. 1**

| Receive a sidelink semi-static access parameter and a sidelink time domain resource configuration parameter configured by a network | S210 |

| Determine a sidelink resource pool slot set based on the sidelink semi-static access parameter and the sidelink time domain resource configuration parameter | S220 |

| Perform sidelink communication based on at least one slot in the sidelink resource pool slot set | S230 |

**FIG. 2**

| Configure a sidelink semi-static access parameter and a sidelink time domain resource configuration parameter | S310 |

| Send the sidelink semi-static access parameter and the sidelink time domain resource configuration parameter to a communication node to enable the communication node to determine a sidelink resource pool slot set based on the sidelink semi-static access parameter and the sidelink time domain resource configuration parameter and perform sidelink communication based on at least one slot in the sidelink resource pool slot set | S320 |

**FIG. 3**

**FIG. 4**

**FIG. 5**

Slot
boundary

Slot boundary

Semi-static channel
access period

Idle
phase

Slot 0        Slot 1     ······      Slot n

Start
offset
value

Trigger
phase

**FIG. 6**

Communication apparatus

710                    720                    730

Receiver        Determination
module        Communication
module

**FIG. 7**

Communication apparatus

810                    820

Processor        Sending
module

**FIG. 8**

Communication device

920

Memory

Processor

910

**FIG. 9**

## INTERNATIONAL SEARCH REPORT

| | International application No. |
|---|---|
| | **PCT/CN2023/121963** |

**A.     CLASSIFICATION OF SUBJECT MATTER**

H04W72/0446(2023.01)i

According to International Patent Classification (IPC) or to both national classification and IPC

**B.     FIELDS SEARCHED**

Minimum documentation searched (classification system followed by classification symbols)

IPC:H04W,H04Q,H04L

Documentation searched other than minimum documentation to the extent that such documents are included in the fields searched

Electronic data base consulted during the international search (name of data base and, where practicable, search terms used)

CNTXT, WPABS, ENTXTC, CNKI, 3GPP: 边链路, 侧链路, 边路, 侧路, 半静态, 接入参数, 时域, 资源, 配置, 时隙, 集合, 周期, 偏移, 触发, 空闲, 位图, 反馈, sidelink, semi-static, access, parameter, time, domain, resource, allocation, slot, set, period, shift, trigger, idle, bit, map, feedback

**C.     DOCUMENTS CONSIDERED TO BE RELEVANT**

| Category* | Citation of document, with indication, where appropriate, of the relevant passages | Relevant to claim No. |
|---|---|---|
| PX | CN 116321444 A (ZTE CORP.) 23 June 2023 (2023-06-23)<br>claims 1-23 | 1-23 |
| Y | WO 2021255271 A1 (FRAUNHOFER GES FORSCHUNG) 23 December 2021 (2021-12-23)<br>claims 1-26, description, paragraphs 4-115 and 189-387, and figures 1-9 | 1-23 |
| Y | US 2022086911 A1 (SAMSUNG ELECTRONICS CO., LTD.) 17 March 2022 (2022-03-17)<br>description, paragraphs 42, 97, and 200-300, and figures 1-16 | 1-23 |
| Y | CN 113225847 A (ASUSTEK COMPUTER INC.) 06 August 2021 (2021-08-06)<br>claims 1-20, description, paragraphs 163-400 and 430-535, and figures 1-15 | 15-18 |
| A | CN 113678480 A (FUJITSU LTD.) 19 November 2021 (2021-11-19)<br>entire document | 1-23 |
| A | WO 2022029462 A1 (OROPE FRANCE SARL) 10 February 2022 (2022-02-10)<br>entire document | 1-23 |
| A | WO 2022071556 A1 (SHARP K. K.) 07 April 2022 (2022-04-07)<br>entire document | 1-23 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 November 2023** | **06 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/121963**

### C.    DOCUMENTS CONSIDERED TO BE RELEVANT

| Category* | Citation of document, with indication, where appropriate, of the relevant passages | Relevant to claim No. |
|---|---|---|
| A | WO 2022152947 A1 (TELEFONAKTIEBOLAGET LM ERICSSON (PUBL)) 21 July 2022 (2022-07-21)<br>entire document | 1-23 |
| A | WO 2022156686 A1 (GUANGDONG OPPO MOBILE TELECOMMUNICATIONS CORP., LTD.) 28 July 2022 (2022-07-28)<br>entire document | 1-23 |

Form PCT/ISA/210 (second sheet) (July 2022)

INTERNATIONAL SEARCH REPORT
Information on patent family members

International application No.

**PCT/CN2023/121963**

| Patent document cited in search report | | | Publication date (day/month/year) | Patent family member(s) | | | Publication date (day/month/year) |
|---|---|---|---|---|---|---|---|
| CN | 116321444 | A | 23 June 2023 | None | | | |
| WO | 2021255271 | A1 | 23 December 2021 | None | | | |
| US | 2022086911 | A1 | 17 March 2022 | WO | 2022060102 | A1 | 24 March 2022 |
| | | | | KR | 20220036678 | A | 23 March 2022 |
| CN | 113225847 | A | 06 August 2021 | KR | 20210095056 | A | 30 July 2021 |
| | | | | EP | 3855860 | A1 | 28 July 2021 |
| | | | | US | 2023345559 | A1 | 26 October 2023 |
| | | | | US | 2021227602 | A1 | 22 July 2021 |
| | | | | US | 11729843 | B2 | 15 August 2023 |
| CN | 113678480 | A | 19 November 2021 | None | | | |
| WO | 2022029462 | A1 | 10 February 2022 | None | | | |
| WO | 2022071556 | A1 | 07 April 2022 | None | | | |
| WO | 2022152947 | A1 | 21 July 2022 | None | | | |
| WO | 2022156686 | A1 | 28 July 2022 | None | | | |

Form PCT/ISA/210 (patent family annex) (July 2022)